# EUROPÄISCHE PATENTSCHRIFT

(11) **EP 2 449 271 B1**
(45) Veröffentlichungstag und Bekanntmachung des Hinweises auf die Patenterteilung: **07.01.2015**
(21) Anmeldenummer: 10739496.7
(22) Anmeldetag: 25.06.2010
(51) Int. Cl.: F16B 11/00

(54) **MONTAGESYSTEM ZUR RASCHEN ANBRINGUNG VON BEFESTIGUNGSELEMENTEN MITTELS LICHTAUSHÄRTENDEN KLEBSTOFFEN**
INSTALLATION SYSTEM FOR QUICKLY ATTACHING FASTENING ELEMENTS BY MEANS OF LIGHT-CURING ADHESIVES
SYSTÈME DE MONTAGE POUR L'APPLICATION RAPIDE D'ÉLÉMENTS DE FIXATION AU MOYEN D'ADHÉSIFS DURCISSANT À LA LUMIÈRE

(30) Priorität: 29.06.2009 DE 102009031188
(43) Veröffentlichungstag der Anmeldung: 09.05.2012
(73) Patentinhaber: Nie Wieder Bohren AG, 63450 Hanau (DE)
(72) Erfinder: BRAUN, Frank, 63584 Gründau (DE)
(74) Vertreter: Patentanwälte Gierlich & Pischitzis Partnerschaft
(86) Internationale Anmeldenummer: PCT/EP2010/003824
(87) Internationale Veröffentlichungsnummer: WO 2011/000503

(56) Entgegenhaltungen:
- EP-A1- 0 823 561
- EP-A1- 1 947 156
- JP-A- 2001 054 945

## Beschreibung

### Gebiet der Erfindung

Die Erfindung betrifft ein Montagesystem zur Halterung von ortsfesten Gegenständen, wie Handtuchhaltern, Regalen, Leuchten oder dergleichen Ausstattungsartikeln, an einer Montagefläche, etwa einer Wand oder einer Decke, insbesondere in mit Kacheln, Marmorplatten oder mit dergleichen Wandverkleidungen ausgestatteten Räumen, umfassend ein oder mehrere Befestigungselemente, eine Leuchtvorrichtung und/oder ein Haft- und Verbindungsmittel. Ein derartiges Montagesystem ist aus der EP 1 947 156 A1 bekannt.

### Stand der Technik

Aus dem Stand der Technik sind eine Vielzahl von Montagesystemen zur Anbringung von Befestigungselementen der unterschiedlichsten Ausbildungsformen und Materialien an Wänden im Sanitär- und Küchenbereich bekannt, wobei insbesondere für derartige Wände und deren Wandverkleidungen in Form von Kacheln oder Marmorplatten das Problem darin besteht, dass die Befestigungselemente bei einer Kachelwand beispielsweise in traditioneller Weise zwischen den Kacheln in die Fugen, insbesondere im Bereich der Fugenkreuze durch Bohrungen befestigt werden, wobei die an die jeweilige Fuge angrenzenden Kacheln oftmals beschädigt werden, aussplittern oder deren Glasur einreißt, was neben optisch wahrnehmbaren Qualitätseinbußen auch Spätschäden verursacht, verbunden mit aufwändigen Nacharbeiten oder, dass bei einer örtlichen Verlegung der Befestigungsstelle oder bei Fehlmontagen an unübersichtlichen Bereichen, wie Ecken und Kanten neben einer schwierigen Anbringung der Befestigungselemente unschöne, wieder zu schließende, Dübellöcher entstehen. Aus diesem Grunde werden die Befestigungselemente vielfach mittels der verschiedenartigsten Klebverbindungen befestigt, die aber den Anforderungen genügen müssen, dass die Befestigungselemente größere Kräfte aufnehmen müssen zur Aufnahme von Elementen zur Halterung ortsfester Gegenstände, wie Handtuchhalter, Regalen usw. unter Berücksichtigung der konstruktiven und statischen Bedingungen, wie Festigkeit des Klebstoffes, Festigkeit des Befestigungselementes, Flächenbelastung des Montagesystems und des Aufbaus der Wandsysteme.

Aus den Offenlegungsschriften WO 03/036106 A1, DE 101 52 053 A1, WO 01/81774 A1, und DE 44 16 884 sind Befestigungselemente zur Verklebung auf glatten Oberflächen bekannt. Diese Befestigungselemente weisen eine Einfüllöffnung auf, über die ein Haft- und Verbindungsmittel in einen Hohlraum zwischen dem Befestigungselement und einer Decke oder Wand eingebracht werden kann. Um überschüssiges Haft- und Verbindungsmittel sowie die Luft, die durch das in den Hohlraum eintretende Haft- und Verbindungsmittel verdrängt wird, entweichen zu lassen, können die Befestigungselemente mit Steigöffnungen oder offenporigen Komponenten versehen sein. Haftfolien ermöglichen eine Fixierung der Befestigungselemente während der Trocknungsphase des eingebrachten Haft- und Verbindungsmittels.

Ein Problem, welches durch den Stand der Technik bisher nicht gelöst werden konnte, resultiert aus der Zeitspanne, die vergeht, bis eine Klebeverbindung ausreichend belastbar ist. Hierdurch kommt es zu langen Wartezeiten, welche die Arbeiten verzögern. Bei Anwendungen im Haushaltsbereich ist es sogar üblich, dass ein Monteur wiederholt anreisen muss - zum Ankleben eines Befestigungselementes und zur anschließenden Montage eines Gegenstandes an dem Befestigungselement.

### Aufgabe

Ausgehend vom beschriebenen Stand der Technik liegt der Erfindung die Aufgabe zu Grunde, ein Montagesystem zur Anbringung von Befestigungselementen, die zur Halterung von ortsfesten Gegenständen, wie Handtuchhaltern, Regalen, Leuchten oder dergleichen Ausstattungsartikeln ausgebildet sind, an einer Montagefläche, etwa einer Wand oder einer Decke, insbesondere in mit Kacheln, Marmorplatten oder mit dergleichen Wandverkleidungen ausgestatteten Räumen, anzugeben, wobei die Wartezeit zwischen dem Verkleben des Befestigungselementes mit der Montagefläche und der Anbringung der ortsfesten Gegenstände entfällt bzw. stark verkürzt ist.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Zur Halterung von ortsfesten Gegenständen, wie Handtuchhaltern, Regalen, Leuchten oder dergleichen Ausstattungsartikeln an einer Montagefläche, etwa einer Wand oder einer Decke, insbesondere in mit Kacheln, Marmorplatten oder mit dergleichen, etwa aus Holz, Glas, Stein, Keramik oder Kunststoff bestehenden Wandverkleidungen ausgestatteten Räumen schlägt die Erfindung ein Montagesystem vor. Dieses Montagesystem umfasst ein oder mehrere Befestigungselemente, mindestens eine Leuchtvorrichtung und/oder ein Haft- und Verbindungsmittel. Bei dem Haft- und Verbindungsmittel handelt es sich um einen lichtaushärtenden Klebstoff.

Das Befestigungselement ist so ausgebildet, dass es sich durch Einbringung des Haft- und Verbindungsmittels in einen Kleberraum an der Montagefläche befestigen lässt. Weiterhin ist das Befestigungselement so ausgebildet, dass - nachdem das Haft und Verbindungsmittel ausgehärtet ist - die ortsfesten Gegenstände an dem Befestigungselement angebracht werden können.

Den Kleberraum bildet die Montagefläche zusammen mit einer oder mehreren Komponenten des Befestigungselements, d.h. jede Begrenzungsfläche des Kleberraums ist identisch mit einem Teil der Montagefläche oder einem Teil der Oberfläche einer der Komponenten des Befestigungselements, die den Kleberraum bilden. Wird in den Kleberraum eine ausreichende Menge des Haft- und Verbindungsmittel eingebracht, kommt das eingebrachte Haft- und Verbindungsmittel mit der Montagefläche und den Komponenten des Befestigungselements, die den Kleberraum bilden, in Kontakt. Nach dem Aushärten des Haft- und Verbindungsmittels besteht eine stoffschlüssige Verbindung zwischen der Montagefläche und dem Befestigungselement.

Das Haft- und Verbindungsmittel kann auf verschieden Arten in ausreichender Menge in den Kleberraum eingebracht werden. So ist es möglich, vor dem Aufsetzen des Befestigungselements auf die Montagefläche das Haft- und Verbindungsmittel auf die Montagefläche oder auf das Befestigungselement derart aufzubringen, dass sich das Haft- und Verbindungsmittel in dem Kleberraum befindet, wenn das Befestigungselement auf die Montagefläche aufgesetzt ist. Bevorzugt weist das Befestigungselement eine Ausnehmung auf, die zusammen mit der Montagefläche den Kleberraum bildet. Vor dem Aufsetzen auf die Montagefläche kann diese Ausnehmung mit dem Haft- und Verbindungsmittel befüllt werden. Vorzugsweise gleicht dabei das Volumen des eingefüllten Haft- und Verbindungsmittels, dem durch die Ausnehmung definierten Volumen oder übersteigt dieses.

Eine bevorzugte Ausführungsform des Befestigungselements weist mindestens eine Einfüllöffnung auf, durch die das Haft- und Verbindungsmittel in ausreichender Menge in den Kleberraum eingebracht werden kann, wenn das Befestigungselement auf die Montagefläche aufgesetzt ist. Um überschüssiges Haft- und Verbindungsmittel und die Luft, die durch das eindringende Haft- und Verbindungsmittel verdrängt wird, entweichen zu lassen, kann das Befestigungselement zudem mit einer oder mehreren Steigöffnungen versehen sein oder in Teilen aus einem offenporigen Material bestehen.

Nach dem Aufsetzen des Befestigungselements auf die Montagefläche, dem Einbringen des Haft- und Verbindungsmittels in den Kleberraum und dem Aushärten des Haft- und Verbindungsmittels können die ortsfesten Gegenstände an dem Befestigungselement montiert werden. Um die Wartezeit bis zur Montage der ortsfesten Gegenstände zu minimieren, kommt in neuartiger Ausführung als Haft- und Verbindungsmittel ein lichtaushärtender Klebstoff zum Einsatz.

Bei lichtaushärtenden bzw. photoinitiiert härtenden Klebstoffen handelt es sich gewöhnlich um einkomponentige Klebstoffe, die unter Einwirkung von elektromagnetischer Aktivierungsstrahlung als Initiator einer chemischen Reaktion aushärten. Das Absorptionsspektrum, d.h. das Spektrum an Wellenlängen, die zur Aushärtung des Klebstoffs führen, liegt dabei üblicherweise in einem Bereich zwischen 320 nm und 550 nm. Im Unterschied zu schnell härtenden Klebstoffen, wie Cynacrylat Klebstoffen (Sekundenkleber), erfolgt die Aushärtung bei lichtaushärtenden Klebstoffen kontrolliert. Insbesondere kann der Monteur den Moment, von dem an - durch die Bestrahlung initiiert - die Aushärtung des Klebstoffs erfolgt, individuell bestimmen. So ist gewährleistet, dass ausreichend Zeit zur Verfügung steht, um den Klebstoff in den Kleberraum zu füllen und gegebenenfalls das Befestigungselement auf der Montagefläche zu justieren.

Erfindungsgemäß ist mindestens eine der Komponenten des Befestigungselements, die den Kleberraum bilden, mindestens teilweise lichtdurchlässig. Insbesondere ist diese mindestens eine mindestens teilweise lichtdurchlässige Komponente des Befestigungselements derart lichtdurchlässig, dass eine Bestrahlung des Haft- und Verbindungsmittels durch diese mindestens eine lichtdurchlässige Komponente des Befestigungselements hindurch mit einer Aktivierungsstrahlung zur Aushärtung des Haft- und Verbindungsmittels führt. Das bedeutet, dass der Transmissionsbereich der mindestens einen mindestens teilweise lichtdurchlässigen Komponente sich zumindest teilweise mit dem Absorptionsspektrum des als Haft- und Verbindungsmittel verwendeten Klebstoffs überlappt. Es gibt also Bereiche von Wellenlängen, die sowohl im Transmissionsbereich der mindestens einen mindestens lichtdurchlässigen Komponente als auch im Absorptionsspektrum des Klebstoffs enthalten sind. Die Komponenten des Befestigungselements, die nicht zu den mindestens teilweise lichtdurchlässigen Komponenten des Befestigungselements zählen, können lichtundurchlässig sein. Dies ermöglicht eine Gestaltung des Befestigungselements derart, dass es ausreichend belastbar ist.

Es ist möglich, das Haft- und Verbindungsmittel nach dem Aufsetzen des Befestigungselements auf die Montagefläche und Einbringen des Haft- und Verbindungsmittels in den Kleberraum durch die mindestens eine mindestens teilweise lichtdurchlässige Komponente des Befestigungselements hindurch mit Aktivierungsstrahlung zu bestrahlen. Dies führt zu einer Aushärtung des Haft- und Verbindungsmittels. Die so hergestellte Klebeverbindung ist bereits nach einer sehr kurzen Wartezeit ausreichend belastbar, so dass die ortsfesten Gegenstände an dem Befestigungselement montiert werden können. In Abhängigkeit von der zur Bestrahlung verwendeten Lichtquelle und dem lichtaushärtenden Klebstoff, der als Haft- und Verbindungsmittel genutzt wird, liegt die Wartezeit zwischen 1 sec und mehreren Minuten, maximal jedoch 10 min, bevorzugt weniger als 5 min.

Erfindungsgemäß ist eine der mindestens teilweise lichtdurchlässigen Komponenten des Befestigungselements als ein erster Ring ausgebildet, wobei sich der Kleberraum innerhalb dieses ersten Rings befindet. Dabei wird der Kleberraum durch den ersten Ring, die Montagefläche und einen zum Befestigungselement gehörigen Grundkörper gebildet. Bevorzugt ist der Grundkörper lichtundurchlässig. Der erste Ring kann als O-Ring mit kreisförmiger oder ovaler Querschnittsfläche ausgestaltet sein. Um eine unerwünschte Brechung der Aktivierungsstrahlung zu vermeiden, weist der erste Ring aber bevorzugt eine rechteckige Querschnittsfläche auf. Die Grundfläche des ersten Ringes kann beliebig ausgebildet sein, etwa als Rechteck, vorzugsweise aber als Kreis. Der erste Ring kann mit dem Grundkörper verklebt sein. Alternativ weist der Grundkörper eine randnahe Ausnehmung auf, die den ersten Ring kraftschlüssig oder formschlüssig mit dem Grundkörper verbindet. Bevorzugt ist der erste Ring innerhalb des Befestigungselements so angeordnet, dass er beim Aufsetzen des Befestigungselements auf die Montagefläche mit dieser in Kontakt kommt. Um das Befestigungselement auf der Montagefläche vorzufixieren, kann eine Stirnfläche, d.h. eine der Grundfläche ab- und der Montagefläche zugewandte Fläche, des ersten Rings eine Klebeschicht, beispielsweise in Gestalt einer Haftfolie, aufweisen.

Vorzugsweise ist eine zweite der mindestens teilweise lichtdurchlässigen Komponenten des Befestigungselements, die den Kleberraum bilden, als ein zweiter Ring ausgebildet, wobei sich der Kleberraum außerhalb dieses zweiten Ringes befindet. Dabei wird der Kleberraum durch den zweiten Ring, die Montagefläche und den Grundkörper gebildet. Wie auch der erste Ring kann der zweite Ring als O-Ring mit kreisförmiger oder ovaler Querschnittsfläche ausgestaltet sein. Um eine unerwünschte Brechung der Aktivierungsstrahlung zu vermeiden, weist der zweite Ring aber bevorzugt eine rechteckige Querschnittsfläche auf. Die Grundfläche des zweiten Ringes kann beliebig ausgebildet sein, etwa als Rechteck, vorzugsweise aber als Kreis. Der zweite Ring kann mit dem Grundkörper verklebt sein. Alternativ weist der Grundkörper eine Ausnehmung auf, die den zweiten Ring kraftschlüssig oder formschlüssig mit dem Grundkörper verbindet. Bevorzugt ist der zweite Ring innerhalb des Befestigungselements so angeordnet, dass er beim Aufsetzen des Befestigungselements auf die Montagefläche mit dieser in Kontakt kommt. Um das Befestigungselement auf der Montagefläche vorzufixieren, kann eine Stirnfläche, d.h. eine der Grundfläche ab- und der Montagefläche zugewandte Fläche, des zweiten Rings eine Klebeschicht, beispielsweise in Gestalt einer Haftfolie, aufweisen.

Das Befestigungselement kann den ersten Ring ohne den zweiten Ring oder den zweiten Ring ohne den ersten Ring umfassen. Vorzugsweise gehören sowohl der erste als auch der zweite Ring zu dem Befestigungselement. Dabei ist der zweite Ring innerhalb des ersten Rings angeordnet, so dass sich der Kleberraum zwischen dem ersten und dem zweiten Ring befindet, wobei der Kleberraum von dem ersten Ring, dem zweiten Ring, dem Grundkörper und der Montagefläche gebildet wird. Dies ermöglicht eine Bestrahlung des Haft- und Klebemittels sowohl durch den ersten als auch durch den zweiten Ring hindurch. Die Breite des Kleberraums bzw. der Abstand zwischen dem ersten und dem zweiten Ring kann folglich vergrößert werden.

Um das Haft- und Verbindungsmittel durch den zweiten Ring hindurch bestrahlen zu können, wenn das Befestigungselement auf der Montagefläche aufgesetzt ist, weist das Befestigungselement bevorzugt eine Einführöffnung auf. Der Grundkörper, die Einführöffnung, der zweite Ring und die Montagefläche umschließen einen Hohlraum, in den durch die Einführöffnung eine Lichtquelle eingeführt werden kann, welche mindestens den zweiten Ring bestrahlt. Diese Lichtquelle erzeugt vorzugsweise Aktivierungsstrahlung, welche durch den zweiten Ring hindurch das Haft- und Verbindungsmittel bestrahlt und aushärtet.

Vorteilhaft ist, dass die Einführöffnung mit einem Aufnahmeelement verschlossen werden kann. Alternativ kann dieses Aufnahmeelement an weiteren Stellen des Grundkörpers bzw. des Befestigungselements angebracht sein. Das Aufnahmeelement dient dazu, die zu montierenden ortsfesten Gegenstände an dem Befestigungselement zu fixieren. Zur Aufnahme und Fixierung der ortsfesten Gegenstände kann das Aufnahmeelement ein Innengewinde, ein Außengewinde oder andere, dem Fachmann bekannte Fixiermechanismen aufweisen. Es kann weiterhin mit dem Grundkörper bzw. mit dem Befestigungselement eine stoffliche Einheit bilden oder mit dem Grundkörper bzw. mit dem Befestigungselement beispielsweise durch Einpressen, Aufnieten, Kleben oder Einschrauben verbunden werden.

In einer weiteren Ausführungsform verläuft mindestens eine der Begrenzungsflächen des Kleberraums, die mit einem Teil der Oberfläche einer der mindestens teilweise lichtdurchlässigen Komponenten des Befestigungselements identischen sind, im Wesentlichen parallel zu der Montagefläche, d.h. die mindestens eine der Begrenzungsflächen des Kleberraums verläuft unter Vernachlässigung von Fertigungstoleranzen und Oberflächenrauheiten parallel zu der Montagefläche. Beispielsweise können in den optisch dichten, d.h. aus lichtundurchlässigem Material bestehenden, Grundkörper Fenster aus einem transparenten Material, das insbesondere für Strahlung der Wellenlänge, welche zum Aushärten des Haft- und Verbindungsmittels führt, durchlässig ist, eingelassen sein. Auch ist es möglich, den Grundkörper vollständig aus einem transparenten Material zu fertigen.

Vorteilhaft ist weiterhin, dass mindestens eine Einfüllöffnung und/oder mindestens eine Steigöffnung mit jeweils einer der mindestens teilweise lichtdurchlässigen Komponenten des Befestigungselements verschlossen werden können, nachdem das Haftund Verbindungsmittel durch die mindestens eine Einfüllöffnung in den Kleberraum eingebracht worden ist. Dies ermöglicht eine Bestrahlung des Haft- und Verbindungsmittels durch die mindestens eine mit einer der mindestens teilweise lichtdurchlässigen Komponenten des Befestigungselements verschlossene Einfüllöffnung und/oder mindestens eine mit einer der mindestens teilweise lichtdurchlässigen Komponenten des Befestigungselements verschlossene Steigöffnung hindurch, so dass das Haft- und Verbindungsmittel aushärtet. Dabei kommt die Lichtquelle, welche die Aktivierungsstrahlung erzeugt, nicht in direkten Kontakt mit dem Haft- und Verbindungsmittel. Insbesondere wird eine Beschädigung der Lichtquelle durch Kontakt mit dem noch nicht ausgehärteten Haft- und Verbindungsmittel vermieden.

In einer bevorzugten Ausführungsform reflektiert, bricht und/oder streut mindestens eine der mindestens teilweise lichtdurchlässigen Komponenten des Befestigungselements Licht. Vorteilhaft ist insbesondere eine Reflexion, Brechung oder Streuung der Aktivierungsstrahlung durch die mindestens eine der mindestens teilweise lichtdurchlässigen Komponenten des Befestigungselements. Dadurch ist es möglich, die Aktivierungsstrahlung auch in möglicherweise vorhandene Schattenzonen innerhalb des Kleberraums einzubringen. Zudem können so mittels vergleichsweise kleiner mindestens teilweise lichtdurchlässiger Komponenten des Befestigungselements große Bereiche des Kleberraums bestrahlt werden. Dies verbessert die Möglichkeiten der konstruktiven Gestaltung des Befestigungselements. Insbesondere können große Teile des Befestigungselements als lichtundurchlässige Komponenten ausgelegt werden.

Eine zur Aushärtung eines lichtaushärtenden Klebstoffs ausgebildete erste Leuchtvorrichtung weist mindestens eine Lichtquelle auf, die durch die Einführöffnung des Befestigungselements in den von dem Grundkörper der Einführöffnung, dem zweiten Ring und der Montagefläche umschlossenen Hohlraum eingeführt werden kann. Wird diese mindestens eine Lichtquelle in ebendiesen Hohlraum eingeführt, so befindet sich der zweite Ring im Strahlengang der mindestens einen Lichtquelle. Dies bedeutet, dass der zweite Ring durch die mindestens eine Lichtquelle direkt bestrahlt wird und insbesondere nicht ausschließlich von indirektem und/oder diffusem Licht getroffen wird. Vorzugsweise wird die Innenfläche des zweiten Rings dabei vollständig bestrahlt. Mit Lichtquelle wird der Ort der Leuchtvorrichtung bezeichnet, von dem aus das Licht in die Umgebung emittiert wird. Die mindestens eine Lichtquelle erzeugt bevorzugt Aktivierungsstrahlung in einer Wellenlänge und Intensität, die zur Aushärtung des als Haft- und Verbindungsmittels verwendeten Klebstoffs führt. Insbesondere überlappt sich das Emissionsspektrum der mindestens einen Lichtquelle, d.h. das Spektrum der Wellenlängen der von dieser Lichtquelle erzeugten Aktivierungsstrahlung, mit dem Absorptionsspektrum des als Haft- und Verbindungsmittel verwendeten Klebstoffs. Vorzugsweise erzeugt die mindestens eine Lichtquelle weiterhin Aktivierungsstrahlung in einer Wellenlänge und Intensität, die zur Aushärtung des als Haft- und Verbindungsmittels verwendeten Klebstoffs führt, wenn sie den Klebstoff durch den zweiten Ring hindurch bestrahlt. Insbesondere überlappen sich das Emissionsspektrum der der mindestens einen Lichtquelle, das Absorptionsspektrum des als Haft- und Verbindungsmittel verwendeten Klebstoffs und das Transmissionsspektrum des zweiten Rings in einem gemeinsamen Bereich. Der Strahlengang der mindestens einen Lichtquelle verläuft in eingeführtem Zustand der Leuchtvorrichtung vorzugsweise parallel zu der Montagefläche. Um die Innenfläche des zweiten Rings vollständig zu bestrahlen, weist der Strahlengang der mindestens einen Lichtquelle zudem bevorzugt eine scheibenförmige Geometrie auf. Alternativ sind Scheibensegmente oder Zylinder als Geometrie des Strahlengangs der mindestens einen Lichtquelle denkbar. Bevorzugt ergänzen sich dabei mehrere Strahlengänge, die jeweils die Form eines Scheibensegments besitzen, zu einem gemeinsamen Strahlengang in Form einer Scheibe. Bestrahlt die erste Leuchtvorrichtung die Innenfläche des zweiten Rings nur partiell, kann eine vollständige Aushärtung des Haft- und Verbindungsmittels durch Drehen der Leuchtvorrichtung um die eigene Achse erreicht werden.

Eine zur Aushärtung eines lichtaushärtenden Klebstoffs ausgebildete zweite Leuchtvorrichtung weist mindestens zwei Lichtquellen auf und kann auf die Montagefläche aufgesetzt werden, so dass sich zwischen den mindestens zwei Lichtquellen das Befestigungselement, aufweisend den ersten Ring, befindet. Wenn die Leuchtvorrichtung auf die Montagefläche aufgesetzt ist und sich zwischen den mindestens zwei Lichtquellen das Befestigungselement befindet, befindet sich der erste Ring in den Strahlengängen der mindestens zwei Lichtquellen. Diese mindestens zwei Lichtquellen erzeugen bevorzugt Aktivierungsstrahlung in einer Wellenlänge und Intensität, die zur Aushärtung des als Haft- und Verbindungsmittels verwendeten Klebstoffs führt. Insbesondere überlappt sich das Emissionsspektrum der mindestens zwei Lichtquellen, d.h. das Spektrum der Wellenlängen der von diesen Lichtquellen erzeugten Aktivierungsstrahlung, mit dem Absorptionsspektrum des als Haft- und Verbindungsmittel verwendeten Klebstoffs. Vorzugsweise erzeugen die mindestens zwei Lichtquellen weiterhin Aktivierungsstrahlung in einer Wellenlänge und Intensität, die zur Aushärtung des als Haft- und Verbindungsmittels verwendeten Klebstoffs führt, wenn sie den Klebstoff durch den zweiten Ring hindurch bestrahlt. Insbesondere überlappen sich das Emissionsspektrum der der mindestens zwei Lichtquellen, das Absorptionsspektrum des als Haft- und Verbindungsmittel verwendeten Klebstoffs und das Transmissionsspektrum des zweiten Rings in einem gemeinsamen Bereich. Die Strahlengänge der mindestens zwei Lichtquellen verlaufen in aufgesetztem Zustand der Leuchtvorrichtung vorzugsweise parallel zu der Montagefläche. Bestrahlt die zweite Leuchtvorrichtung die Außenfläche des ersten Rings nur partiell, kann eine vollständige Aushärtung des Haft- und Verbindungsmittels durch Drehen der Leuchtvorrichtung um die eigene Achse erreicht werden.

Eine zur Aushärtung eines lichtaushärtenden Klebstoffs ausgebildete dritte Leuchtvorrichtung weist eine ringförmige Lichtquelle auf und kann auf die Montagefläche aufgesetzt werden, so dass sich innerhalb der ringförmigen Lichtquelle das Befestigungselement, aufweisend den ersten Ring, befindet. Wenn die Leuchtvorrichtung auf die Montagefläche aufgesetzt ist und sich innerhalb der ringförmigen Lichtquelle das Befestigungselement befindet, befindet sich der erste Ring in dem Strahlengang der ringförmigen Lichtquelle. Insbesondere wird die Außenfläche des ersten Rings durch die diese ringförmige Lichtquelle vollständig bestrahlt. Bevorzugt erzeugt die ringförmige Lichtquelle Aktivierungsstrahlung in einer Wellenlänge und Intensität, die zur Aushärtung des als Haft- und Verbindungsmittels verwendeten Klebstoffs führt. Insbesondere überlappt sich das Emissionsspektrum der ringförmigen Lichtquelle, d.h. das Spektrum der Wellenlängen der von dieser Lichtquelle erzeugten Aktivierungsstrahlung, mit dem Absorptionsspektrum des als Haft- und Verbindungsmittel verwendeten Klebstoffs. Vorzugsweise erzeugt die ringförmige Lichtquelle weiterhin Aktivierungsstrahlung in einer Wellenlänge und Intensität, die zur Aushärtung des als Haft- und Verbindungsmittels verwendeten Klebstoffs führt, wenn sie den Klebstoff durch den zweiten Ring hindurch bestrahlt. Insbesondere überlappen sich das Emissionsspektrum der der ringförmigen Lichtquelle, das Absorptionsspektrum des als Haftund Verbindungsmittel verwendeten Klebstoffs und das Transmissionsspektrum des zweiten Rings in einem gemeinsamen Bereich. Der Strahlengang der ringförmigen Lichtquelle verläuft in aufgesetztem Zustand der Leuchtvorrichtung vorzugsweise parallel zu der Montagefläche.

Statt der zweiten oder der dritten Leuchtvorrichtung kann eine handelsübliche Aushärtungslampe als Lichtquelle zur Bestrahlung des Haft- und Verbindungsmittels durch den ersten Ring hindurch mit einer Aktivierungsstrahlung, die zur Aushärtung des Haftund Verbindungsmittels führt, verwendet werden. Um das Haft-und Verbindungsmittel vollständig zu bestrahlen, muss der Monteur eine solche Aushärtlampe auf einer konzentrischen Bahn so um den ersten Ring herum führen, dass der Lichtkegel der Aushärtungslampe stets in Richtung des ersten Rings orientiert ist d.h. der erste Ring sich stets im Lichtkegel der Aushärtungslampe befindet. Hierbei besteht allerdings die Gefahr, dass das Haft- und Verbindungsmittel aufgrund möglicher Fehlbedienung nicht ausreichend bestrahlt wird.

Eine vierte Leuchtvorrichtung zur Aushärtung eines lichtaushärtenden Klebstoffs umfasst erfindungsgemäß eine oben als erste Leuchtvorrichtung beschriebene Leuchtvorrichtung mit mindestens einer Lichtquelle, die durch die Einführöffnung des Befestigungselements eingeführt werden kann, und eine der oben als zweite Leuchtvorrichtung mit mindestens zwei Lichtquellen oder als dritte Leuchtvorrichtung mit einer ringförmigen Lichtquelle beschriebenen Leuchtvorrichtungen zum Aufsetzen auf die Montagefläche. Dabei bilden die vierte Leuchtvorrichtung, die als erste Leuchtvorrichtung beschriebene Leuchtvorrichtung und die als zweite oder dritte Leuchtvorrichtung beschriebene Leuchtvorrichtung eine bauliche Einheit. Mit der vierten Leuchtvorrichtung kann das Haft- und Verbindungsmittel durch den ersten Ring und durch den zweiten Ring hindurch simultan mit Aktivierungsstrahlung bestrahlt werden. Dies vereinfacht die Befestigung des Befestigungselements auf der Montagefläche und führt zu einer gleichmäßigeren Aushärtung des Haft- und Verbindungsmittels. Bestrahlt die vierte Leuchtvorrichtung die Außenfläche des ersten oder die Innenfläche des zweiten Rings nur partiell, kann eine vollständige Aushärtung des Haft- und Verbindungsmittels durch Drehen der Leuchtvorrichtung um die eigene Achse erreicht werden.

Ein erfindungsgemäßes Montagesystem zur Halterung von ortsfesten Gegenständen, wie Handtuchhaltern, Regalen, Leuchten oder dergleichen Ausstattungsartikeln, an einer Montagefläche, etwa einer Wand oder einer Decke, insbesondere in mit Kacheln, Marmorplatten oder mit dergleichen Wandverkleidungen ausgestatteten Räumen, umfasst eine oder mehrere der oben beschriebenen Befestigungselemente und oder mindestens eine der oben beschriebenen Leuchtvorrichtungen. Zusätzlich kann das Montagesystem ein Haft- und Verbindungsmittel umfassen, bei dem es sich um einen lichtaushärtenden Klebstoff handelt.

Ein erfindungsgemäßes Verfahren unter Verwendung eines oder mehrerer der oben beschriebenen Befestigungselemente, mindestens einer der oben beschriebenen Leuchtvorrichtungen und eines Haft- und Verbindungsmittels, bei dem es um einen lichtaushärtenden Klebstoff handelt, zur Halterung von ortsfesten Gegenständen, wie Handtuchhaltern, Regalen, Leuchten oder dergleichen Ausstattungsartikeln, an einer an einer Montagefläche, etwa einer Wand oder einer Decke, insbesondere in mit Kacheln, Marmorplatten oder mit dergleichen Wandverkleidungen ausgestatteten Räumen beinhaltet folgende Schritte: Aufsetzen des Befestigungselementes auf die Montagefläche, Einbringen des Haft- und Verbindungsmittels und Härten des Haft- und Verbindungsmittels durch Bestrahlung mit mindestens einer der Leuchtvorrichtungen.

Weiterhin beansprucht wird die Verwendung eines oder mehrerer der oben beschriebenen Befestigungselemente, mindestens einer der oben beschriebenen Leuchtvorrichtungen und eines Haft- und Verbindungsmittels, bei dem es um einen lichtaushärtenden Klebstoff handelt, zur Halterung von ortsfesten Gegenständen, wie Handtuchhaltern, Regalen, Leuchten oder dergleichen Ausstattungsartikeln, an einer Montagefläche, etwa einer Wand oder einer Decke, insbesondere in mit Kacheln, Marmorplatten oder mit dergleichen Wandverkleidungen ausgestatteten Räumen. Darüber hinaus sind beliebige weitere Verwendungen denkbar, bei denen ein Gegenstand auf einer Fläche zu fixieren ist. Insbesondere können die Befestigungselemente, die Leuchtvorrichtungen, das Haft- und Verbindungsmittels und/oder das Montagesystems verwendet werden, um andere Vorrichtungen auf Oberflächen zu befestigen.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: Befestigungselement mit einer Leuchtvorrichtung zum Aufsetzen;
- Fig. 2: Befestigungselement mit einer Leuchtvorrichtung zum Einführen;
- Fig. 3: Befestigungselement mit einer Leuchtvorrichtung zum Umführen;
- Fig. 4: Befestigungselement mit einer Leuchtvorrichtung mit ringförmiger Lichtquelle zum Aufsetzens;
- Fig. 5: Befestigungselement mit einem umlaufenden transparenten Element;
- Fig. 6: Befestigungselement mit einem in den Grundkörper integrierten transparenten Element;
- Fig. 7: Befestigungselement mit Fenstern.
- Fig. 8: Befestigungselement mit einem transparenten Grundkörper

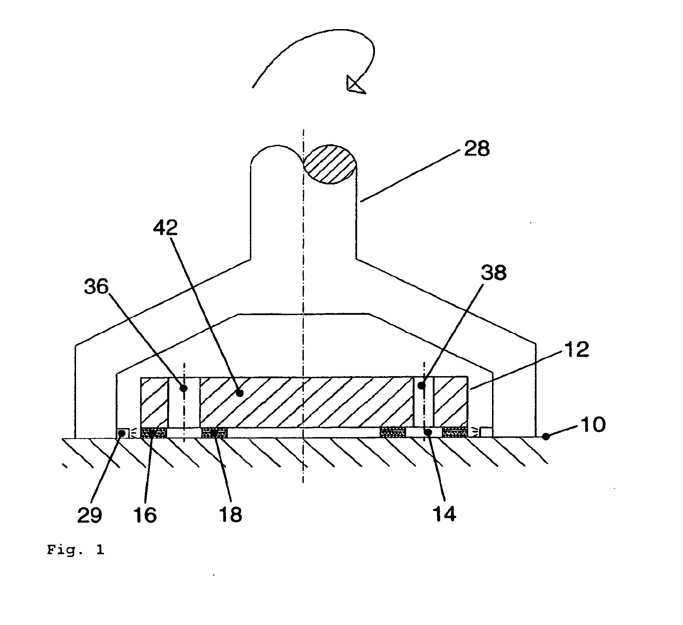

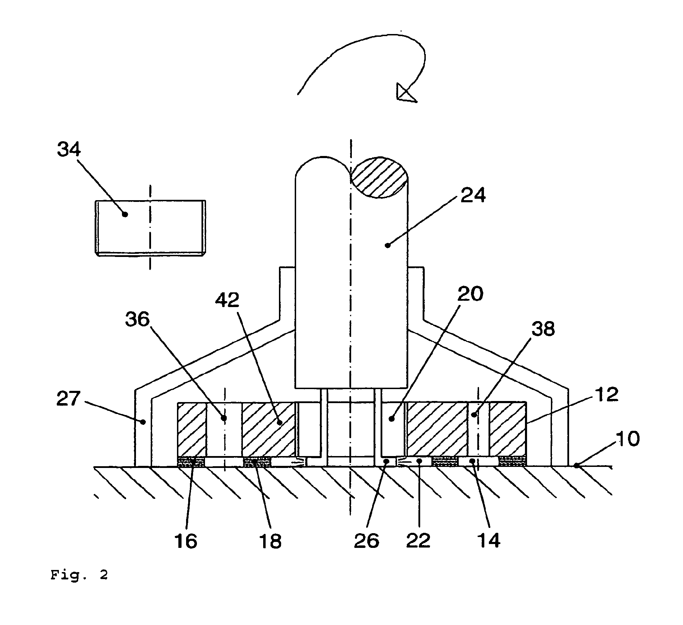

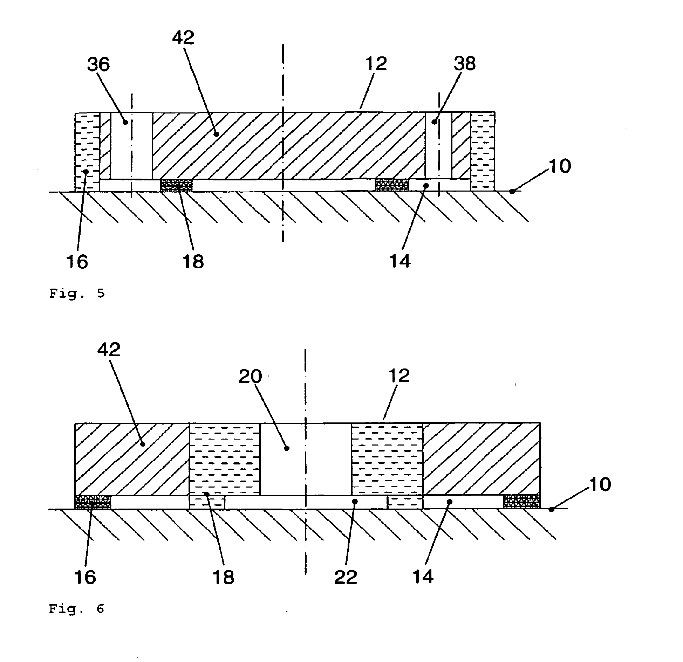

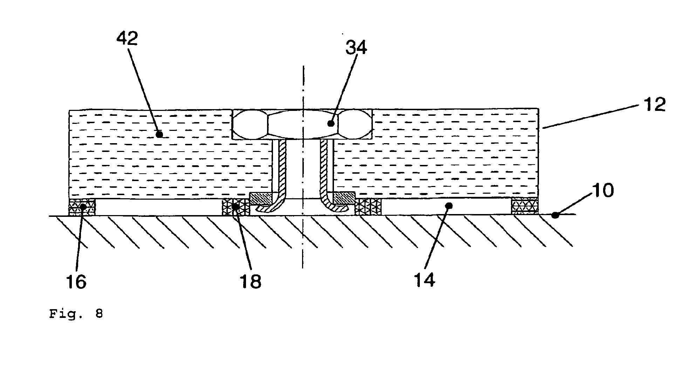

Die Figuren 1 bis 8 zeigen beispielhafte Ausführungsformen des Befestigungselements 12. Dieses besteht aus einem Grundkörper 42, einem ersten Ring 16 sowie einem zweiten Ring 18 und weist einen Kleberraum 14 auf. Zur Befestigung der zu montierenden ortsfesten Gegenstände dient ein Aufnahmeelement 34. Dieses kann beispielsweise - wie in Fig. 2 dargestellt - mit dem Grundkörper verschraubt werden oder mittels einer in Fig. 8 dargestellten Nietverbindung unlösbar mit dem Grundkörper 42 verbunden sein. Das Befestigungselement 12 kann ferner eine Einführöffnung 20, eine Einfüllöffnung 36 und/oder eine Steigöffnung 38 aufweisen.

Sowohl der erste Ring 16 als auch der zweite Ring 18 besitzen eine rechteckige Querschnittsfläche und sind mit dem Grundkörper verklebt. Beide Ringe 16, 18 können aus einem transparenten Material bestehen, das insbesondere für Strahlung der Wellenlänge, welche zum Aushärten des Haft- und Verbindungsmittels führt, durchlässig ist. Geeignete Materialien für die Ringe 16, 18 sind etwa Glas, Plexiglas oder transparenter Kunststoff, vorzugsweise transparente doppelseitige Klebefolie. Fehlt, wie in Fig. 1, Fig. 3 bis 5 sowie Fig. 7 und 8 dargestellt, die Einführöffnung 20, kann der zweite Ring 18 auch aus einem optisch dichten Material bestehen.

Ebenso besteht der Grundkörper 42 bei den in Fig. 1 bis 7 gezeigten Ausführungsformen aus einem optisch dichten, d.h. lichtundurchlässigen Material, beispielsweise Metall, Kunststoff und/oder Keramik. Auf diese Weise kann der Grundkörper die Kräfte der montierten ortsfesten Gegenstände beschädigungsfrei aufnehmen und über die Klebeverbindung an die Montagefläche weiterleiten.

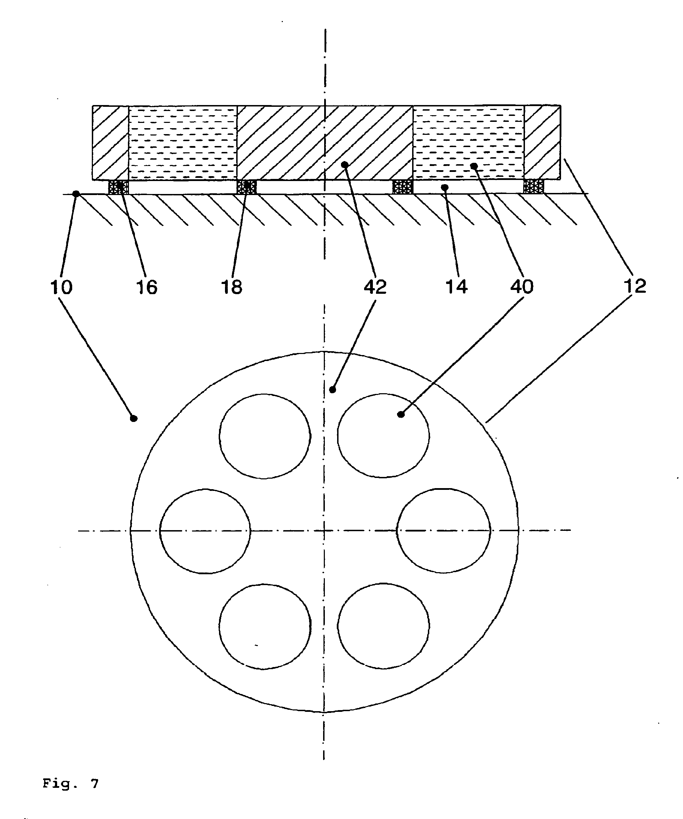

Fig. 7 zeigt eine Ausführungsform des Befestigungselements 12, bei dem transparente Fenster 40, die eine parallel zu der Montagefläche 10 verlaufende Begrenzungsfläche des Kleberraums 14 bilden, in den Grundkörper 42 eingelassen sind. Dies ermöglicht eine Bestrahlung des Haft- und Verbindungsmittels durch die Fenster 40 hindurch, wobei der Strahlengang der verwendeten Leuchtvorrichtung senkrecht zu der Montagefläche 10 verläuft. In diesem Fall können sowohl der erste Ring 16 als auch der zweite Ring 18 aus einem optisch dichten Material bestehen. Ferner ist es möglich, den zweiten Ring 18 fortzulassen, so dass der gesamte Bereich innerhalb des ersten Rings 16 den Kleberraum 14 bildet.

Der Grundkörper 42 der in Fig. 8 dargestellten Ausführungsform besteht aus einem transparenten Material. Insbesondere bildet der Grundkörper eine parallel zu der Montagefläche 10 verlaufende Begrenzungsfläche des Kleberraums 14. Dies ermöglicht eine vollständige Bestrahlung des Haft- und Verbindungsmittels durch den Grundkörper 42 hindurch. Um zu verhindern, dass der Grundkörper 42 durch die zu montierenden ortsfesten Gegenstände beschädigt wird, liegen die die ortsfesten Gegenstände im montierten Zustand vorzugsweise auf dem Grundkörper 42 auf, so dass auftretende Torsionsmomente nicht in das Aufnahmeelement 34 eingeleitet, sondern durch den Grundkörper 42 abgestützt werden. Zu diesem Zweck ist in Fig. 8 das Aufnahmeelement 34 in eine Ausnehmung des Grundkörper 42 eingelassen. Analog zu Fig. 7 können hier sowohl der erste Ring 16 als auch der zweite Ring 18 aus einem optisch dichten Material bestehen.

Um dem Befestigungselement ein optisch attraktives Erscheinungsbild zu verleihen, kann es mit einer - nicht abgebildeten - kappenförmigen Blende versehen werden. Diese wird über das auf der Montagefläche 10 verklebte Befestigungselement 12 gestülpt, wobei das Aufnahmeelement 34 durch ein Loch in der Blende geführt wird. Diese wird ihrerseits durch die Montage eines der ortsfesten Gegenstände an dem Aufnahmeelement 34 fixiert. Die Blende kann alternativ auf ihrer inneren Mantelfläche mit einem Gewinde zum Aufschrauben auf den Grundkörper 42 ausgestattet sein. In diesem Fall ist die Blende statt des Grundkörpers 42 mit dem Aufnahmeelement 34 versehen.

Je nach bestehenden Anforderungen an das Befestigungselement können verschiedene lichtaushärtende Klebstoffe als Haft- und Verbindungsmittel verwendet werden. So sind Klebstoffe verfügbar, die in Abhängigkeit von ihrer Zusammensetzung bei Bestrahlung mit Wellenlängen im Bereich zwischen 280 nm und 550 nm aushärten. Die Härtezeiten von lichtaushärtenden Klebstoffen liegen je nach Zusammensetzung des Klebstoffs und der verwendeten Lichtquelle zwischen 1 sec und wenigen Minuten, maximal jedoch 10 min, bevorzugt weniger als 5 min. Es lassen sich ferner Durchhärtetiefen von bis zu 5 mm erzielen. Die Breite des Kleberraumes 14 bzw. der der Abstand der beiden Ringe 16, 18 kann damit bis zu 10 mm betragen. Dabei spielt natürlich auch das zur Bestrahlung zu durchdringende Material eine wichtige Rolle. Längerwellig aushärtende Kleber benötigen normalerweise etwas länger zum Aushärten, weisen aber einen höhere Durchhärttiefe auf. Allerdings sind heute durch LED-Technik Lichtquellen verfügbar, welche eine sehr intensive Strahlung abgeben können, was die Aushärtezeiten verkürzen kann.

Bei dem verwendeten Kleber kann es sich um einen Kleber auf Acrylatbasis oder Epoxidbasis handeln. Die entsprechende Wellenlänge zur Aktivierung kann dabei durch Photoinitiatoren eingestellt werden. Bevorzugt sind Acrylatklebstoffe, insbesondere Acrylatklebstoffe, welche durch eine radikalische Polymerisation aushärten.

Der Klebstoff kann zudem ein sekundäres Aushärtungssystem enthalten. Dabei findet nach der Bestrahlung und Initiierung der Polymerisation durch Bestrahlung eine weitere sekundäre Aushärtungsreaktion statt, welche keine Bestrahlung benötigt. Dies ermöglicht die Aushärtung auch in Bereichen, welche nicht der Bestrahlung ausgesetzt waren (Schattenzonen). Als mögliche Systeme sind dabei anaerobe Aushärtung oder durch Metallkontakt, aber auch Wärme, d.h. nachträgliches Erhitzen des Befestigungselements. Dabei kann es bei anaerober Aushärtung erforderlich sein, dass das Befestigungselement zumindest in Teilen aus einer Substanz, beispielsweise aus Aluminium, Kupfer, Stahl oder Keramik, besteht, welche die zur Aushärtung benötigten Metallionen an den Klebstoff abgeben kann, beispielsweise aus Aluminium, Kupfer, Stahl oder Keramik. Es kann sich dabei auch um eine entsprechende Beschichtung des Befestigungselements handeln.

Um das Befestigungselement 12 an der Montagefläche 10 zu befestigen, wird das Befestigungselement 12 zunächst auf der Montagefläche 10 vorpositioniert. Hierzu sind die Ringe 16, 18 an ihrer dem Grundkörper 42 abgewandten Seite bzw. ihrer der Montagefläche 10 zugewandten Seite mit einem schnell wirksamen Haftmittel versehen. Geeignet ist beispielsweise eine transparente doppelseitige Klebefolie, die auf der einen Seite mit dem Grundkörper 42 dauerhaft verklebt ist und auf der anderen Seite eine mit einer Schutzfolie versehene Klebefläche aufweist. Nach dem Abziehen der Schutzfolie kann das Befestigungselement 12 auf der Montagefläche vorfixiert werden. Danach wird das Haftund Verbindungsmittel durch die Einfüllöffnung 36 im Grundkörper 42 in den Kleberraum 14 eingefüllt. Durch Bestrahlung des Haft- und Verbindungsmittels durch die Ringe 16, 18, die Fenster 40 oder den transparenten Grundkörper 42 hindurch härtet das Haft- und Verbindungsmittel schließlich aus, so dass die zu montierenden ortsfesten Gegenstände angebracht werden können. Weist das Befestigungselement 12 keine Einfüllöffnung 36 auf, kann das Haft- und Verbindungsmittel alternativ vor dem Positionieren des Befestigungselements 12 auf der Montagefläche 10 in ausreichender Menge auf die Flächen des Befestigungselements 12, die den Kleberraum 14 bilden, aufgebracht und etwa mit einem Spachtel glattgezogen werden.

Fig. 1 zeigt eine Leuchtvorrichtung 28 mit zwei Lichtquellen 29. Die Leuchtvorrichtung 28 kann so auf die Montagefläche 10 aufgesetzt werden, dass sich zwischen den Lichtquellen 29 das Befestigungselement 12 befindet.

Fig. 2 zeigt eine Leuchtvorrichtung 24 mit zwei Lichtquellen 26, die durch die Einführöffnung 20 des Befestigungselements 12 in den Hohlraum 22 eingeführt werden können und das Haft- und Verbindungsmittel durch den zweiten Ring 18 hindurch bestrahlen. Um eine Beschädigung der Leuchtvorrichtung 24 durch Verkanten innerhalb der Einführöffnung 20 zu vermeiden, umfasst die Leuchtvorrichtung 24 bevorzugt eine Stützkonstruktion 27.

Diese Stützkonstruktion 27 richtet die Leuchtvorrichtung 24 beim Einführen in die Einführöffnung 20 senkrecht zur Montagefläche 10 aus. Weiterhin kann die Stützkonstruktion 27 zwei hier nicht abgebildete Leuchtvorrichtungen aufweisen, die das Haft- und Verbindungsmittel durch den ersten Ring 16 hindurch bestrahlen.

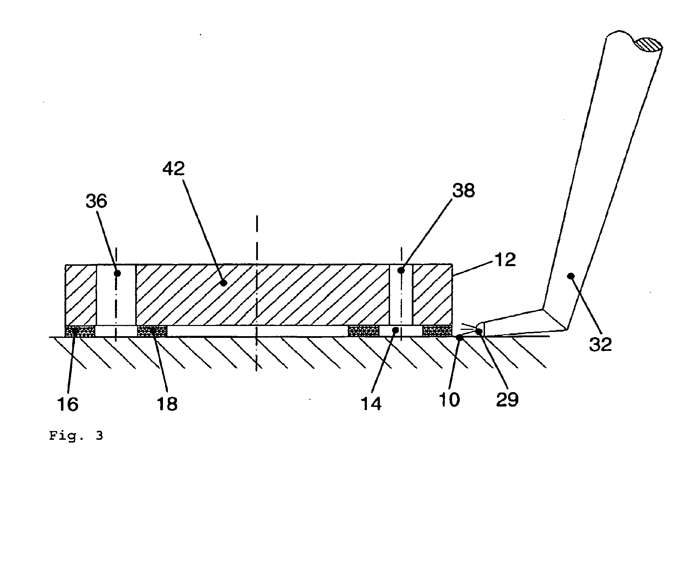

Bei der in Fig. 3 dargestellten Leuchtvorrichtung 32 handelt es sich um eine Leuchtvorrichtung mit einer einzigen Lichtquelle 29, beispielsweise eine handelsübliche Aushärtlampe. Die Leuchtvorrichtung 32 wird zur Aushärtung des Haft- und Verbindungsmittels von außen so um das Befestigungselement 12 herumgeführt, dass die Außenseite des ersten Rings 16 vollständig bestrahlt wird.

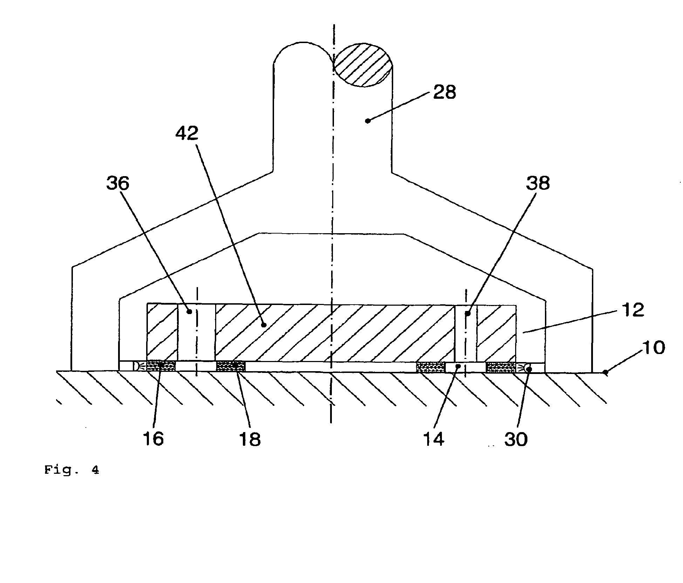

Wie in Fig. 4 dargestellt, kann statt einer Leuchtvorrichtung mit zwei Lichtquellen (vgl. Fig. 1) eine Leuchtvorrichtung 28 mit einer ringförmigen Lichtquelle 30 auf das an der Montagefläche 10 vorfixierte Befestigungselement 12 aufgesetzt werden, um das im Kleberraum 14 befindliche Haft- und Verbindungsmittel auszuhärten.

In einer beispielhaften Ausführungsform der Leuchtvorrichtungen 24, 28 befindet sich eine Vorrichtung zur Lichterzeugung außerhalb der Leuchtvorrichtungen. Das erzeugte Licht wird mittels Lichtleitern zu den Lichtquellen 26, 29, 30 der Leuchtvorrichtungen 24, 28 geführt. Diese Lösung ermöglicht eine gleichmäßige Bestrahlung des Haft- und Verbindungsmittels. Zudem kann die Leuchtvorrichtung 24 so kompakt ausgebildet werden, dass sich die Lichtquelle 26 durch die - vorzugsweise sehr kleine - Einführöffnung 20 in den Hohlraum 22 einführen lässt. Alternativ können Linsen oder Spiegelelemente verwendet werden. Auch ist es möglich, Vorrichtungen zur Lichterzeugung ohne weitere Elemente zur Lichtführung oder -Brechung am Ort der Lichtquellen 26, 29, 30 zu installieren.

### Bezugszeichen

- 10: Montagefläche
- 12: Befestigungselement
- 14: Kleberraum
- 16: erster Ring
- 18: zweiter Ring
- 20: Einführöffnung
- 22: Hohlraum
- 24: Leuchtvorrichtung zum Einführen
- 26: Lichtquelle
- 27: Stützkonstruktion
- 28: Leuchtvorrichtung zum Aufsetzen
- 29: Lichtquelle
- 30: ringförmige Lichtquelle
- 32: Leuchtvorrichtung zum Umführen
- 34: Aufnahmeelement
- 36: Einfüllöffnung
- 38: Steigöffnung
- 40: Fenster
- 42: Grundkörper

### Liste der zitierten Literatur:

WO 03/036106 A1
DE 101 52 053 A1
WO 01/81774 A1
DE 44 16 884

## Patentansprüche

1. Befestigungselement (12) zur Halterung von ortsfesten Gegenständen, wie Handtuchhaltern, Regalen oder Leuchten an einer Montagefläche (10), etwa einer Wand oder einer Decke, insbesondere in mit Kacheln oder Marmorplatten ausgestatteten Räumen, wobei das Befestigungselement (12) durch Einbringung eines Haftund Verbindungsmittels in einen von der Montagefläche (10) und einer oder mehrerer Komponenten des Befestigungselements (12) gebildeten Kleberraum (14) an der Montagefläche (10) befestigbar ist, wobei
a) es sich bei dem Haft- und Verbindungsmittel um einen lichtaushärtenden Klebstoff handelt;
b) mindestens eine der Komponenten des Befestigungselements (12), die den Kleberraum (14) bilden, mindestens teilweise lichtdurchlässig ist; und
c) mindestens eine der mindestens teilweise lichtdurchlässigen Komponenten des Befestigungselements (12) als ein erster Ring (16) ausgebildet ist, wobei sich der Kleberraum (14) innerhalb dieses ersten Ringes (16) befindet.

2. Befestigungselement (12) nach Anspruch 1, **dadurch gekennzeichnet, dass** mindestens eine zweite der mindestens teilweise lichtdurchlässigen Komponenten des Befestigungselements (12) als ein zweiter Ring (18) ausgebildet ist, wobei sich der Kleberraum (14) außerhalb dieses zweiten Ringes (18) befindet.

3. Befestigungselement (12) nach Anspruch 2, **dadurch gekennzeichnet, dass** das Befestigungselement (12) eine Einführöffnung (20) aufweist, wobei ein Grundkörper (24), die Einführöffnung (20), der zweite Ring (18) und die Montagefläche (10) einen Hohlraum (22) umschließen, in den durch die Einführöffnung (20) eine Lichtquelle (26) eingeführt werden kann, welche mindestens den zweiten Ring (18) bestrahlt.

4. Befestigungselement (12) nach Anspruch 3, **dadurch gekennzeichnet, dass** die Einführöffnung (20) durch ein Aufnahmeelement (34) verschlossen werden kann.

5. Befestigungselement (12) nach einem der vorhergehenden Ansprüche, **dadurch gekennzeichnet, dass** mindestens eine der mit einem Teil der Oberfläche einer der mindestens teilweise lichtdurchlässigen Komponenten des Befestigungselements (12) identischen Begrenzungsflächen des Kleberraums (14) parallel zu der Montagefläche (10) verläuft.

6. Befestigungselement (12) nach einem der vorgehenden Ansprüche, wobei das Befestigungselement (12) mindestens eine Einfüllöffnung (36) und/oder mindestens eine Steigöffnung (38) aufweist, **dadurch gekennzeichnet, dass** die mindestens eine Einfüllöffnung (36) und/oder mindestens eine Steigöffnung (38) mit einer der mindestens teilweise lichtdurchlässigen Komponenten des Befestigungselements (12) verschlossen werden können.

7. Befestigungselement (12) nach einem der vorhergehenden Ansprüche, **dadurch gekennzeichnet, dass** mindestens eine der mindestens teilweise lichtdurchlässigen Komponenten des Befestigungselements (12) Licht reflektiert, bricht und/oder streut.

8. Leuchtvorrichtung (32) zur Aushärtung eines lichtaushärtenden Klebstoffs mit einer ersten Leuchtvorrichtung (24), die mindestens eine Lichtquelle (26) aufweist, die durch die Einführöffnung (20) eines Befestigungselements (12) nach einem der Ansprüche 3 bis 7 in einen nach einem der Ansprüche 3 bis 7 von einem Grundkörper (24), einer Einführöffnung (20), einem zweiten Ring (18) und einer Montagefläche (10) umschlossenen Hohlraum (22) eingeführt werden kann, so dass sich der zweite Ring (18) im Strahlengang der mindestens einen Lichtquelle (26) befindet, wenn die Leuchtvorrichtung (24) in den Hohlraum (20) eingeführt ist, wobei
d) die Leuchtvorrichtung zur Aushärtung eines lichtaushärtenden Klebstoffs eine zweite Leuchtvorrichtung (28) umfasst,
e) die mindestens zwei Lichtquellen (29) oder ringförmige Lichtquelle (30) aufweist
g) und auf die Montagefläche (10) aufgesetzt werden kann, so dass sich zwischen den mindestens zwei Lichtquellen (29) oder innerhalb der ringförmigen Lichtquelle (30) das Befestigungselement (12) mit einem ersten Ring (16) befindet und
h) sich der erste Ring (16) in den Strahlengängen der mindestens zwei Lichtquellen (29) oder in dem Strahlengang der ringförmigen Lichtquelle (30) befindet.

9. Montagesystem zur Halterung von ortsfesten Gegenständen, wie Handtuchhaltern, Regalen oder Leuchten, an einer Montagefläche (10), etwa einer Wand oder einer Decke, insbesondere in mit Kacheln oder Marmorplatten oder mit dergleichen Wandverkleidungen ausgestatteten Räumen, umfassend ein oder mehrere Befestigungselemente (12) nach einem der Ansprüche 1 bis 7 und/oder mindestens eine Leuchtvorrichtung.

10. Montagesystem nach Anspruch 9, umfassend ein Haft- und Verbindungsmittel, wobei es sich bei dem Haft- und Verbindungsmittel um einen lichtaushärtenden Klebstoff handelt.

11. Montagesystem nach Anspruch 9 oder 10, umfassend eine Leuchtvorrichtung (32) nach Anspruch 8.

12. Verwendung eines oder mehrerer Befestigungselemente nach einem der Ansprüche 1 bis 7, mindestens einer Leuchtvorrichtung und eines Haft- und Verbindungsmittels, wobei es sich bei dem Haft- und Verbindungsmittel um einen lichtaushärtenden Klebstoff handelt, zur Halterung von ortsfesten Gegenständen, wie Handtuchhaltern, Regalen oder Leuchten, an einer Montagefläche (10), etwa einer Wand oder einer Decke, insbesondere in mit Kacheln oder Marmorplatten ausgestatteten Räumen.

13. Verwendung mindestens einer Leuchtvorrichtung nach Anspruch 12, wobei es sich bei der mindestens einen Leuchtvorrichtung um eine Leuchtvorrichtung (32) nach Anspruch 8 handelt.

14. Verfahren unter Verwendung mindestens eines Befestigungselements (12) nach Anspruch 12, wobei das Verfahren folgende Schritte aufweist:
i) Aufsetzen des mindestens einen Befestigungselements (12) auf die Montagefläche (10),
j) Einbringen des Haft- und Verbindungsmittels und
k) Härten des Haft- und Verbindungsmittels durch Bestrahlung mit der mindestens einen Leuchtvorrichtung.

15. Verfahren nach Anspruch 14 unter Verwendung mindestens einer Leuchtvorrichtung (24, 28, 32) nach Anspruch 8.

## Claims

1. A fastening element (12) for mounting stationary objects, such as towel holders, shelves or lights, on an installation surface (10), such as a wall or a ceiling, in particular in rooms fitted out with tiles or marble slabs, wherein the fastening element (12) can be fastened on the installation surface (10) by introducing an adhering and connecting agent into an adhesive space (14) formed by the installation surface (10) and one or more components of the fastening element (12), wherein
a) the adhering and connecting agent is a light-curing adhesive;
b) at least one of the components of the fastening element (12) that form the adhesive space (14) is at least partially transparent; and
c) at least one of the at least partially transparent components of the fastening element (12) is formed as a first ring (16), the adhesive space (14) being located inside this first ring (16).

2. The fastening element (12) as claimed in claim 1, **characterized in that** at least a second of the at least partially transparent components of the fastening element (12) is formed as a second ring (18), the adhesive space (14) being located outside this second ring (18).

3. The fastening element (12) as claimed in claim 2, **characterized in that** the fastening element (12) has an insertion opening (20), a main body (34), the insertion opening (20), the second ring (18) and the installation surface (10) enclosing a cavity (22) into which a light source (26) which irradiates at least the second ring (18) can be inserted through the insertion opening (20).

4. The fastening element (12) as claimed in claim 3, **characterized in that** the insertion opening (20) can be closed by a receiving element (34).

5. The fastening element (12) as claimed in one of the preceding claims, **characterized in that** at least one of the delimiting surfaces of the adhesive space (14) that are identical to part of the surface of one of the at least partially transparent components of the fastening element (12) runs parallel to the installation surface (10).

6. The fastening element (12) as claimed in one of the preceding claims, the fastening element (12) having at least one filling opening (36) and/or at least one rising opening (38), **characterized in that** the at least one filling opening (36) and/or at least one rising opening (38) can be closed with one of the at least partially transparent components of the fastening element (12).

7. The fastening element (12) as claimed in one of the preceding claims, **characterized in that** at least one of the at least partially transparent components of the fastening element (12) reflects, refracts and/or diffuses light.

8. A lighting device (32) for curing a light-curing adhesive, with a first lighting device (24), which has at least one light source (26), which can be inserted through the insertion opening (20) of a fastening element (12) as claimed in one of claims 3 to 7 into a cavity (22) as claimed in one of claims 3 to 7 enclosed by a main body (24), an insertion opening (20), a second ring (18) and an installation surface (10), so that the second ring (18) is located in the path of rays of the at least one light source (26) when the lighting device (24) has been inserted into the cavity (20), wherein
d) the lighting device for curing a light-curing adhesive comprises a second lighting device (28),
e) which has at least two light sources (29) or an annular light source (30)
g) and can be placed onto the installation surface (10), so that the fastening element (12) with a first ring (16) is located between the at least two light sources (29) or inside the annular light source (30) and
h) the first ring (16) is located in the paths of rays of the at least two light sources (29) or in the path of rays of the annular light source (30).

9. An installation system for mounting stationary objects, such as towel holders, shelves or lights, on an installation surface (10), such as a wall or a ceiling, in particular in rooms fitted out with tiles or marble slabs or similar wall coverings, comprising one or more fastening elements (12) as claimed in one of claims 1 to 7 and/or at least one lighting device.

10. The installation system as claimed in claim 9, comprising an adhering and connecting agent, the adhering and connecting agent being a light-curing adhesive.

11. The installation system as claimed in claim 9 or 10, comprising a lighting device (32) as claimed in claim 8.

12. The use of one or more fastening elements as claimed in one of claims 1 to 7, at least one lighting device and an adhering and connecting agent, the adhering and connecting agent being a light-curing adhesive, for mounting stationary objects, such as towel holders, shelves or lights, on an installation surface (10), such as a wall or a ceiling, in particular in rooms fitted out with tiles or marble slabs.

13. The use of at least one lighting device as claimed in claim 12, the at least one lighting device being a lighting device (32) as claimed in claim 8.

14. A method using at least one fastening element (12) as claimed in claim 12, the method comprising the following steps:
i) placing the at least one fastening element (12) onto the installation surface (10),
j) introducing the adhering and connecting agent and
k) curing the adhering and connecting agent by irradiation with the at least one lighting device.

15. The method as claimed in claim 14 using at least one lighting device (24, 28, 32) as claimed in claim 8.

## Revendications

1. Élément de fixation (12) pour la fixation d'objets fixes, tels que des supports de serviettes, des étagères ou des lampes, sur une surface de montage (10), par exemple un mur ou un plafond, en particulier dans des salles habillées de carreaux ou de plaques de marbre, l'élément de fixation (12) pouvant être fixé à la surface de montage (10) par l'introduction d'un moyen d'adhérence et de liaison dans un espace de colle (14) formé par la surface de montage (10) et un ou plusieurs composants de l'élément de fixation (12),
a) le moyen d'adhérence et de liaison étant un adhésif durcissant à la lumière ;
b) au moins l'un des composants de l'élément de fixation (12) qui forment l'espace de colle (14) étant au moins en partie transparent; et
c) au moins l'un des composants au moins en partie transparents de l'élément de fixation (12) étant réalisé sous forme d'un premier anneau (16), l'espace de colle (14) se trouvant à l'intérieur de ce premier anneau (16).

2. Élément de fixation (12) selon la revendication 1, **caractérisé en ce qu'**au moins un deuxième des composants au moins en partie transparents de l'élément de fixation (12) est réalisé sous forme d'un deuxième anneau (18), l'espace de colle (14) se trouvant à l'extérieur de ce deuxième anneau (18).

3. Élément de fixation (12) selon la revendication 2, **caractérisé en ce que** l'élément de fixation (12) présente une ouverture d'insertion (20), un corps de base (24), l'ouverture d'insertion (20), le deuxième anneau (18) et la surface de montage (10) entourant une cavité (22) dans laquelle peut être introduite, à travers l'ouverture d'insertion (20), une source de lumière (26) qui éclaire au moins le deuxième anneau (18).

4. Élément de fixation (12) selon la revendication 3, **caractérisé en ce que** l'ouverture d'insertion (20) peut être fermée par un élément de réception (34).

5. Élément de fixation (12) selon l'une quelconque des revendications précédentes, **caractérisé en ce qu'**au moins une des surfaces de limitation de l'espace de colle (14) identiques à une partie de la surface de l'un des composants au moins en partie transparents de l'élément de fixation (12) s'étend parallèlement à la surface de montage (10).

6. Élément de fixation (12) selon l'une quelconque des revendications précédentes, dans lequel l'élément de fixation (12) présente au moins une ouverture de remplissage (36) et/ou au moins une ouverture montante (38), **caractérisé en ce que** l'au moins une ouverture de remplissage (36) et/ou au moins une ouverture montante (38) peuvent être fermées par l'un des composants au moins en partie transparents de l'élément de fixation (12).

7. Élément de fixation (12) selon l'une quelconque des revendications précédentes, **caractérisé en ce qu'**au moins l'un des composants au moins en partie transparents de l'élément de fixation (12) réfléchit, réfracte et/ou diffuse la lumière.

8. Dispositif d'éclairage (32) pour faire durcir un adhésif durcissant à la lumière, comprenant un premier dispositif d'éclairage (24) qui présente au moins une source de lumière (26), qui peut être introduite à travers l'ouverture d'insertion (20) d'un élément de fixation (12) selon l'une quelconque des revendications 3 à 7 dans une cavité (22) selon l'une quelconque des revendications 3 à 7 entourée par un corps de base (24), une ouverture d'insertion (20), un deuxième anneau (18) et une surface de montage (10), de sorte que le deuxième anneau (18) se trouve dans le passage du faisceau de l'au moins une source de lumière (26) lorsque le dispositif d'éclairage (24) est introduit dans la cavité (20),
d) le dispositif d'éclairage pour faire durcir un adhésif durcissant à la lumière présentant un deuxième dispositif d'éclairage (28),
e) qui présente au moins deux sources de lumière (29) ou une source de lumière de forme annulaire (30),
g) et peut être placé sur la surface de montage (10), de sorte que l'élément de fixation (12) se trouve avec un premier anneau (16) entre les au moins deux sources de lumière (29) ou à l'intérieur de la source de lumière de forme annulaire (30) et
h) le premier anneau (16) se trouve dans les passages des faisceaux des au moins deux sources de lumière (29) ou dans le passage du faisceau de la source de lumière de forme annulaire (30).

9. Système de montage pour fixer des objets fixes, tels que des supports de serviettes, des étagères ou des lampes, sur une surface de montage (10), par exemple un mur ou un plafond, en particulier dans des salles habillées de carreaux ou de plaques de marbre ou d'habillages de paroi similaires, comprenant un ou plusieurs éléments de fixation (12) selon l'une quelconque des revendications 1 à 7 et/ou au moins un dispositif d'éclairage.

10. Système de montage selon la revendication 9, comprenant un moyen d'adhérence et de liaison, le moyen d'adhérence et de liaison étant un adhésif durcissant à la lumière.

11. Système de montage selon la revendication 9 ou 10, comprenant un dispositif d'éclairage (32) selon la revendication 8.

12. Utilisation d'un ou plusieurs éléments de fixation selon l'une quelconque des revendications 1 à 7, d'au moins un dispositif d'éclairage et d'un moyen d'adhérence et de liaison, le moyen d'adhérence et de liaison étant un adhésif durcissant à la lumière, pour la fixation d'objets fixes, tels que des supports de serviettes, des étagères ou des lampes, sur une surface de montage (10), par exemple un mur ou un plafond, en particulier dans des salles habillées de carreaux ou de plaques de marbre.

13. Utilisation d'au moins un dispositif d'éclairage selon la revendication 12, l'au moins un dispositif d'éclairage étant un dispositif d'éclairage (32) selon la revendication 8.

14. Procédé avec utilisation d'au moins un élément de fixation (12) selon la revendication 12, dans lequel le procédé présente les étapes suivantes:
i) positionnement de l'au moins un élément de fixation (12) sur la surface de montage (10),
j) introduction du moyen d'adhérence et de liaison et
k) durcissement du moyen d'adhérence et de liaison par éclairage avec l'au moins un dispositif d'éclairage.

15. Procédé selon la revendication 14 utilisant au moins un dispositif d'éclairage (24, 28, 32) selon la revendication 8.
